# EUROPEAN PATENT SPECIFICATION

(11) **EP 4 083 555 B1**
(45) Date of publication and mention of the grant of the patent: **25.03.2026**
(21) Application number: 22170142.8
(22) Date of filing: 26.04.2022
(51) Int. Cl.: F28D 1/00

(54) **MICROCHANNEL HEAT EXCHANGER DRAIN**
MIKROKANALWÄRMETAUSCHERABFLUSS
DRAIN D'ÉCHANGEUR DE CHALEUR À MICROCANAUX

(30) Priority: 28.04.2021 US 202163180927 P
(43) Date of publication of application: 02.11.2022
(73) Proprietor: Carrier Corporation, Palm Beach Gardens, FL 33418 (US)
(72) Inventor: TAY, Lian San, 629146 Singapore (SG)
(74) Representative: Dehns

(56) References cited:
- DE-B4- 102008 034 123
- JP-A- H04 214 197
- KR-B1- 101 478 664
- KR-B1- 101 626 596
- US-A1- 2006 137 855

## Description

The present invention relates to a heat exchanger, and more particularly, to a heat exchanger for use in a container refrigeration unit. More specifically, the present invention relates to a heat exchanger as defined in the preamble of claim 1, and as illustrated in JP H 04 214197 A.

The heat rejected by a condenser coil of a container refrigeration unit is typically used to prevent water within the drain system of the unit from freezing. In existing container refrigeration units, the condenser coil is a tube-fin heat exchanger including a plurality of copper tubes extending through aligned sheets that form fins. Because the bend portion of the copper tubes cannot extend through the sheets of fins, the conduits of the drain system are routed under or behind a mainframe to avoid interference with the condenser coil. However, this indirect routing of the drain system adds complexity and cost to the system.

According to a first aspect of the present invention, a heat exchanger includes a first manifold, a second manifold, a body including a plurality of heat exchange tube segments arranged in spaced parallel relationship and fluidly coupling the first manifold and the second manifold, and a plurality of fins disposed between adjacent heat exchange tube segments of the plurality of heat exchange tube segments. At least one opening is formed in the body. The at least one opening extends through the body. A bent section of at least one of the plurality of heat exchange tube segments is bent out of a plane of the at least one of the plurality of heat exchange tube segments, the at least one opening being formed by the bent section of the at least one of the plurality of heat exchange tube segments. A fin is not connected to the at least one of the plurality of heat exchange tube segments at the bent section.

Optionally, the at least one opening is arranged at a central portion of the body.

Optionally, the at least one opening is arranged at an edge of the body.

Optionally, the plurality of heat exchange tube segments includes a first heat exchange tube segment having a first bent section and a second heat exchange tube segment having a second bent section, the at least one opening being defined between the first bent section and the second bent section.

Optionally, the first bent section is bent in a first direction and the second bend section is bent in a second direction, opposite the first direction, the first bent section and the second bent section being aligned.

Optionally, each of the plurality of heat exchange tube segments defines a plurality of discrete flow channels that extend over a length of the plurality of heat exchange tube segments.

Optionally, at least one fold is formed in the plurality of heat exchange tube segments, the at least one fold being defined about an axis extending generally perpendicular to a longitudinal axis of the plurality of heat exchange tube segments.

Optionally, the at least one fold includes a first fold and a second fold such that the body of the heat exchanger is generally U-shaped.

Optionally, the heat exchanger is configured to operate as a condenser in a container refrigeration unit.

According to a second aspect of the present invention, a refrigeration system includes a support surface, a heat exchanger according to the first aspect of the invention mounted to the support surface. A portion of the drain system extends through an opening of the at least one opening of the heat exchanger.

Optionally, the drain system includes a conduit extendable through the opening of the heat exchanger.

Optionally, the heat exchanger is a microchannel heat exchanger.

Optionally, the opening is arranged at a central portion of the body of the heat exchanger.

Optionally, the opening is arranged at an edge of the body of the heat exchanger.

Optionally, the refrigeration system is a container refrigeration unit.

A detailed description of one or more embodiments of the disclosed apparatus and method are presented herein by way of exemplification and not limitation with reference to the Figures. The following descriptions should not be considered limiting in any way. With reference to the accompanying drawings, like elements are numbered alike:
FIG. 1 is a schematic diagram of a basic vapor compression refrigeration cycle of a heating, ventilation, air conditioning, and refrigeration system;
FIG. 2 is a front view of a heat exchanger for use in the heating, ventilation, air conditioning, and refrigeration system;
FIG. 3 is a cross-sectional view of a heat exchange tube and fin segment of the heat exchanger of FIG. 2;
FIG. 4 is a perspective view of a folded heat exchanger;
FIG. 5 is a detailed perspective view of a portion of the heat exchanger of FIG. 4;
FIG. 6 is a front view of a heat exchanger having an opening formed therein;
FIG. 7 is a perspective view of a drain pipe extending through an opening formed in a heat exchanger; and
FIG. 8 is a schematic diagram of a heat exchanger having an opening mounted within a refrigeration system of a container refrigeration unit.

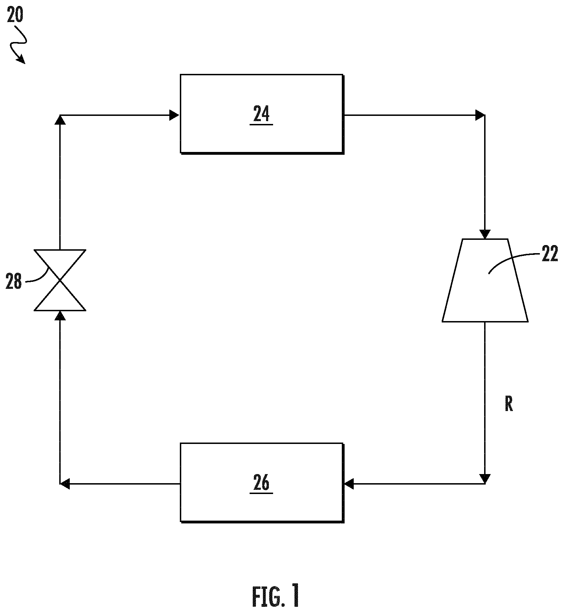

Referring now to FIG. 1, a vapor compression cycle 20 of a heating, ventilation, air conditioning, and refrigeration (HVAC&R) system is schematically illustrated. Exemplary HVAC&R systems include, but are not limited to, residential, split, packaged, chiller, rooftop, supermarket, and transport HVAC&R systems, for example. A working fluid, such as refrigerant R for example, is configured to circulate through the vapor compression cycle 20 such that the refrigerant R absorbs heat when evaporated at a low temperature and pressure and releases heat when condensed at a higher temperature and pressure.

Within this vapor compression cycle 20, the refrigerant flows in a counterclockwise direction as indicated by the arrow. The compressor 22 receives refrigerant vapor from the evaporator 24 and compresses it to a higher temperature and pressure, with the relatively hot vapor then passing to the condenser 26 where it is cooled and condensed to a liquid state by a heat exchange relationship with a cooling medium (not shown) such as air. The liquid refrigerant R then passes from the condenser 26 to an expansion device 28, wherein the refrigerant R is expanded to a low temperature two-phase liquid/vapor state as it passes to the evaporator 24. The relatively cold two-phase refrigerant mixture then passing to the evaporator 24 where it is boiled to a vapor state by a heat exchange relationship with a heating medium (not shown) such as air. The low pressure vapor then returns to the compressor 22 where the cycle is repeated.

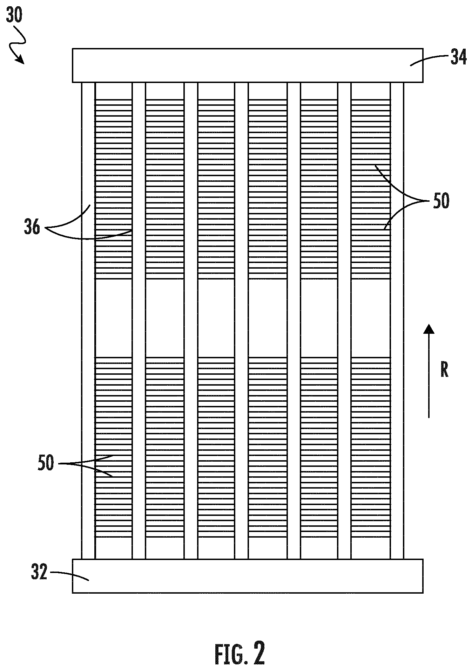

Referring now to FIG. 2, an example of heat exchanger 30 suitable for use as either a condenser 26 or an evaporator 24 is illustrated in more detail. The heat exchanger 30 includes at least a first manifold or header 32, a second manifold or header 34 spaced apart from the first manifold 32, and a body defined by a plurality of heat exchange tube segments 36 extending in a spaced, parallel relationship between and connecting the first manifold 32 and the second manifold 34. In the illustrated, non-limiting embodiments, the first header 32 and the second header 34 are oriented generally along a first direction and the heat exchange tube segments 36 extend generally along a second direction between the two headers 32, 34.

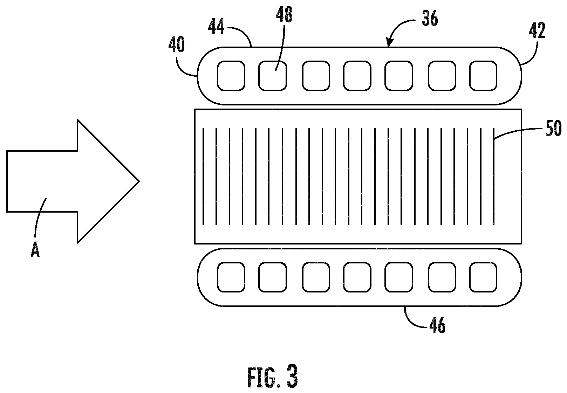

Referring now to FIG. 3, a cross-sectional view of a portion of a heat exchange tube segment 36 of the heat exchanger 30 is illustrated. As shown, the heat exchanger 30 may be a microchannel heat exchanger such that the heat exchange tube segments 36 include a flattened microchannel heat exchange tube having a leading edge 40, a trailing edge 42, a first surface 44 and a second surface 46. The leading edge 40 of the heat exchange tube segment 36 is upstream of its respective trailing edge 42 with respect to airflow A passing through the heat exchanger 30 and flowing across the heat exchange tube segment 36. An interior flow passage of the heat exchange tube segment 36 may be divided by interior walls into a plurality of discrete flow channels 48 that extend over a length of the heat exchange tube segment 36 from an inlet end to an outlet end and establish fluid communication between the first and second manifolds 32, 34. The flow channels 48 may have a circular cross-section or, for example, a rectangular cross-section, a trapezoidal cross-section, a triangular cross-section or another non-circular cross-section. The heat exchange tube segment 36 including discrete flow channels 48 may be formed using known techniques and materials, including but not limited to, extruding or folding.

The heat exchange tube segments 36 disclosed herein include a plurality of fins 50. In some embodiments, the fins 50 are formed from a continuous strip of fin material folded in a ribbon-like serpentine fashion thereby providing a plurality of closely spaced fins 50 that extend generally orthogonally to the heat exchange tube segments 36. Thermal energy exchange between one or more fluids within the heat exchange tube segments 36 and an air flow A occurs through the outside surfaces 44, 46 of the heat exchange tube segments 36 collectively forming a primary heat exchange surface, and also through thermal energy exchange with the fins 50, which defines a secondary heat exchange surface.

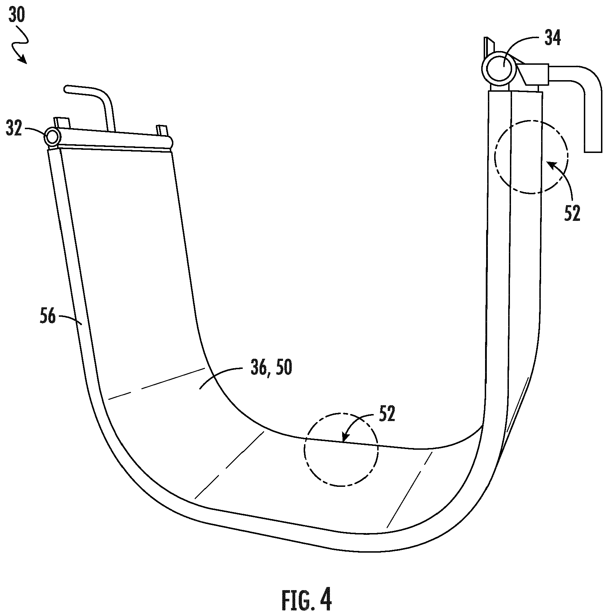

One or more folds may be formed in each heat exchange tube segment 36 of the heat exchanger 30. The heat exchange tube segments 36 are typically folded about an axis extending perpendicular to the longitudinal axis of the heat exchange tube segments 36. In the illustrated, non-limiting FIG. 4, the heat exchange tube segments 36 have a first fold and a second fold formed therein, such that the heat exchanger 30 has a generally C or U shape. However, it should be understood that embodiments of the heat exchanger 30 having another number of folds formed therein, such as a single fold, more than two folds, or alternatively, no folds, are also within the scope of the invention, as defined in the appended claims. Further, the two portions of the heat exchanger 30 arranged at opposite sides of a fold axis may be oriented at any suitable angle relative to one another. For example, in embodiments of the heat exchanger 30 having a C-shape or U-shape, the two sides of each fold are oriented at approximately 90 degrees or generally perpendicular to one another. However, a fold having an angle greater than 90 degrees, such as up to about 180 degrees for example, or less than 90 degrees is also contemplated herein.

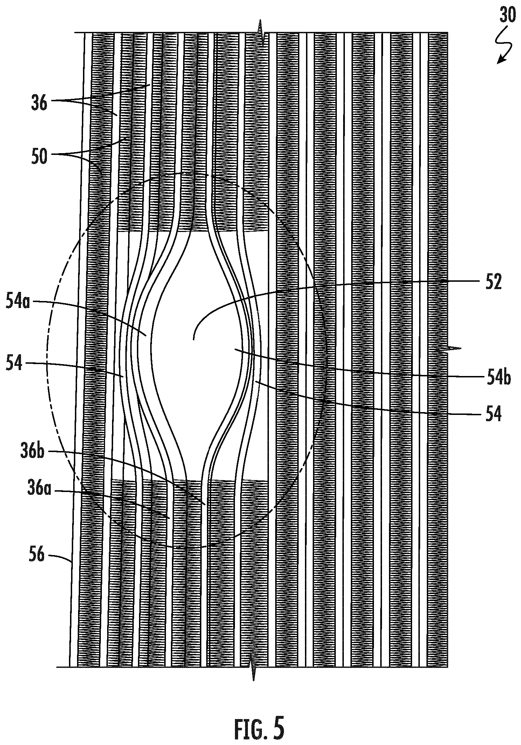

With continued reference to FIG. 4 and further reference to FIGS. 5-8, one or more openings 52 may be formed in the body of the heat exchanger 30. The one or more openings 52 may extend through the body of the heat exchanger 30 in the same plane as the airflow A at a portion of the heat exchanger 30 directly adjacent to the opening 52. As previously noted, all or at least a portion of the plurality of heat exchange tube segments 36 have a generally linear configuration and are arranged generally parallel to one another.

In an embodiment, a section 54 of at least one of the plurality of heat exchange tube segments 36, as best shown in FIG. 5, is bent out of the plane containing of the longitudinal axis of the heat exchange tube segment 36 to form an opening 52 in the body of the heat exchanger 30. For example, a first heat exchange tube segment 36a and a second heat exchange tube segment 36b located directly adjacent to one another include an aligned first section 54a and a second section 54b, respectively. The first section 54a is bent in a first direction away from the second heat exchange tube segment 36b and the second section 54b is bent in a second opposite direction, away from the first heat exchange tube segment 36a. In such embodiments, the opening 52 formed in the body of the heat exchanger 30 is therefore defined by the gap formed between the first section 54a and the second section 54b in combination.

In an embodiment, a section of one or more additional heat exchange tube segments 36, such as the heat exchange tube segments 36 located directly adjacent to the first heat exchange tube segment 36a and/or the second heat exchange tube segment 36b, respectively, may also be bent to accommodate the bend of the first section 54a and the second section 54b. However, it should be understood that the total number of heat exchange tube segments 36 that are bent to form the opening 52 is dependent on the size of the opening 52 being formed. Embodiments where a portion of only a single heat exchange tube segment 36 is bent to form an opening 52 are within the scope of the invention, as defined in the appended claims.

To accommodate the bent section 54 of one or more of the plurality of heat exchange tube segments 36, fins 50 are not affixed to the portion or section 54 of the heat exchange tube segments 36 that are configured to bend to form an opening 52. In the illustrated, non-limiting embodiment, no fins 50 are arranged at either side of the one or more bent sections 54 of the plurality of heat exchange tube segments 36. However, embodiments where the fins 50 are removed from only a single side of a bent section 54, or alternatively, from only a portion of a side of a bent section 54 of a heat exchange tube segment 36 are contemplated herein.

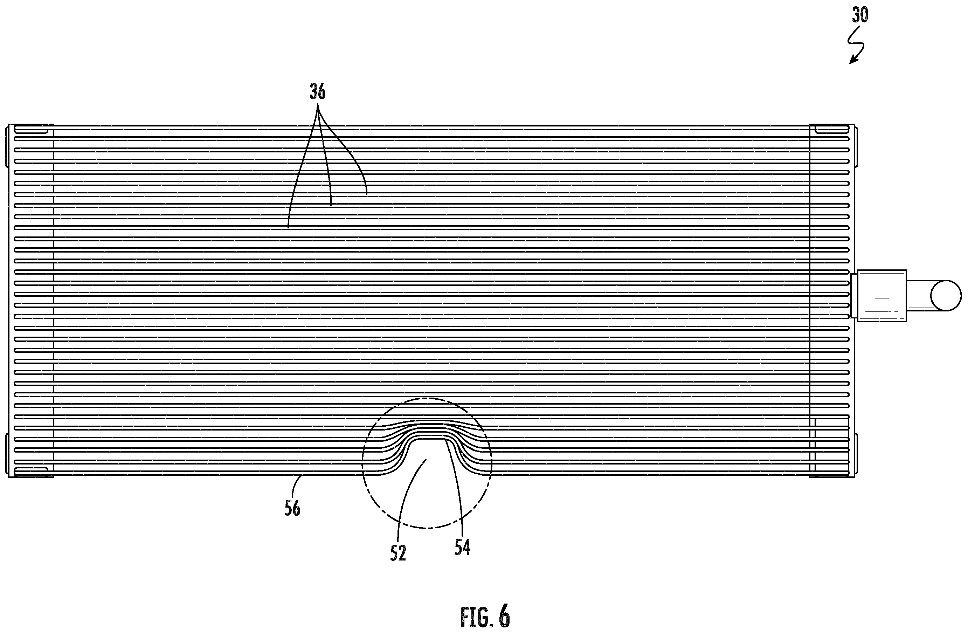

In the illustrated, non-limiting FIG. 5, the opening 52 is formed at a central portion of the body of the heat exchanger 30. As used herein, the term "central portion" is intended to describe an area of the heat exchanger 30 that is offset from or does not include an end or outermost tube segment 56 of the plurality of heat exchange tube segments 36. Alternatively, or in addition, as shown in FIG. 6, an opening 52 may be formed at an edge of the body of the heat exchanger 30. In such embodiments, the opening 52 is formed by bending a section of at least an end tube segment 56 of the heat exchanger 30 towards the adjacent heat exchange tube segments 36 of the body of the heat exchanger.

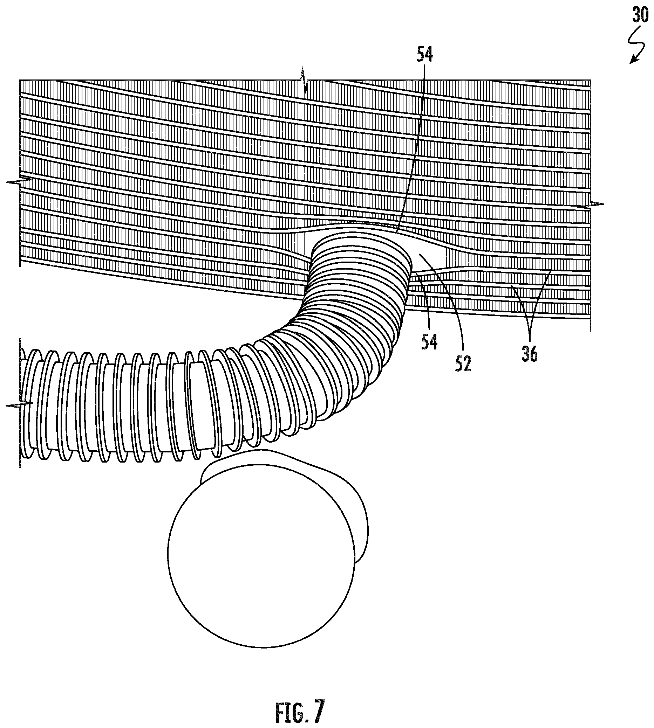

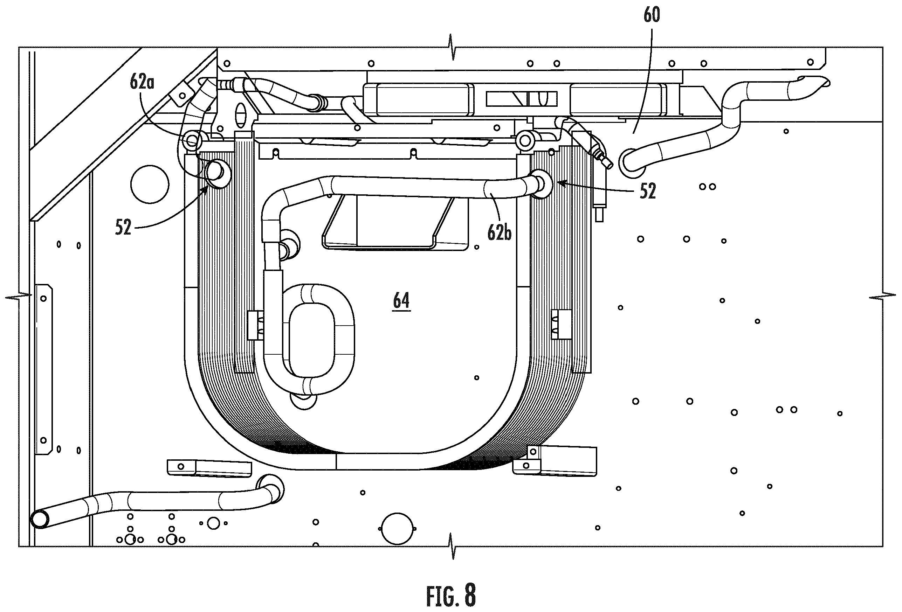

A heat exchanger 30 having one or more openings 52 formed in the body thereof may be used as a condenser coil, such as in a transport or container refrigeration unit. With reference to FIGS. 7 and 8, the heat exchanger 30 having one or more openings 52 formed therein may be mounted to a support surface 60, such as a mainframe of the refrigeration system for example. In an embodiment, when the heat exchanger 30 is mounted to the support surface 60, the headers 32, 34 of the heat exchanger 30 are arranged in a horizontal plane, and the plurality of heat exchange tube segments 36 are disposed vertically below the headers 32, 34, such that the mounted heat exchanger 30 has a generally U-shaped configuration. This is distinguishable from the configuration of the tube-fin heat exchangers previously used as a condenser coil in a container refrigeration unit, which typically had a C-shape defined by headers that are vertically aligned and offset from one another. Accordingly, because the heat exchanger 30 is rotated relative to previous condenser coil configuration, one or more of the other components of the refrigeration system, such as a receiver (not shown) and/or the filter drier assembly (not shown) for example, may be relocated, and in some embodiments may be mounted directly to the support surface 60.

With continued reference now to FIGS. 7 and 8, a conduit or pipe 62 may extend through the one or more openings 52 formed in the heat exchanger 30. In the non-limiting embodiment, the conduit 62 is used to part of a drain system used to drain condensate, such as from the refrigeration system and/or from the area being refrigerated for example. As shown in FIG. 8, a first branch 62a of conduit 62 may extend through an opening 52 formed at a left-hand side of the body of the heat exchanger 30, near a first header 32, and a second branch 62b of conduit 62 may extend through an opening 52 formed at a right-hand side of the body of the heat exchanger 30, near the second, opposite header 34 for example. The first and second branches 62a, 62b may join together within an internal area or space 64 defined between the sides of the body of the heat exchanger 30. In some embodiments, the conduit additionally extends from the internal area 64 through another opening 52 formed in the generally horizontally oriented portion of the body of the heat exchanger 30 to an outlet. However, in other embodiments, the conduit 62 may be routed from the internal area 64 through the support surface 60 to an outlet. It should be understood that the configuration of the drain conduit and the openings 52 formed in the heat exchanger 30 illustrated and described herein are intended as an example only. A heat exchanger 30 having openings 52 at any position suitable for use with a drain system of a refrigeration system or unit is contemplated herein.

In addition, it has been determined that bending a section 54 of one or more of the heat exchange tube segments 36 has a minimal or negligible impact on the operation of the heat exchanger 30. Accordingly, the drain conduit 62 may extend through one or more openings 52 formed in the heat exchanger 30 without substantially affecting operation of the HVAC&R system. With this configuration of the heat exchanger 30 and drain conduit 62, there is no longer a need to route the conduit 62 behind the mainframe 60 via a pair of holes formed at opposite sides of the body of the heat exchanger 30. As a result, the overall design of the mainframe 60 may be simplified, such as by eliminating the need for 2-6 holes formed in the mainframe 60, drain fittings and sealant application. Further, this reduction in complexity may similarly result in a cost reduction. A heat exchanger 30 having one or more openings 52 formed therein is also suitable for use in retro-fit applications.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention, as defined in the appended claims. In addition, many modifications may be made to adapt a particular situation or material to the teachings of the present invention without departing from the scope thereof, as defined in the appended claims. Therefore, it is intended that the present invention not be limited to the particular embodiment disclosed as the best mode contemplated for carrying out this present invention, but that the present invention will include all embodiments falling within the scope of the claims.

## Claims

1. A heat exchanger (30) comprising:
a first manifold (32);
a second manifold (34);
a body including a plurality of heat exchange tube segments (36) arranged in spaced parallel relationship and fluidly coupling the first manifold (32) and the second manifold (34);
a plurality of fins (50) disposed between adjacent heat exchange tube segments (36) of the plurality of heat exchange tube segments (36); and
at least one opening (52) formed in the body, the at least one opening (52) extending through the body;
wherein a bent section (54) of at least one of the plurality of heat exchange tube segments (36) is bent out of a plane of the at least one of the plurality of heat exchange tube segments (36), the at least one opening (52) being formed by the bent section (54) of the at least one of the plurality of heat exchange tube segments (36); and
the heat exchanger being **characterized in that** it further comprises a fin (50) is not connected to the at least one of the plurality of heat exchange tube segments (36) at the bent section (54).

2. The heat exchanger (30) of claim 1, wherein the at least one opening (52) is arranged at a central portion of the body or the at least one opening (52) is arranged at an edge of the body.

3. The heat exchanger (30) of any preceding claim, wherein the plurality of heat exchange tube segments (36) includes a first heat exchange tube segment (36a) having a first bent section (54a) and a second heat exchange tube segment (36b) having a second bent section (54b), the at least one opening (52) being defined between the first bent section (54a) and the second bent section (54b); and
optionally wherein the first bent section (54a) is bent in a first direction and the second bend section (54b) is bent in a second direction, opposite the first direction, the first bent section (54a) and the second bent section (54b) being aligned.

4. The heat exchanger (30) of any preceding claim, wherein each of the plurality of heat exchange tube segments (36) defines a plurality of discrete flow channels (48) that extend over a length of the plurality of heat exchange tube segments (36).

5. The heat exchanger (30) of any preceding claim, wherein at least one fold is formed in the plurality of heat exchange tube segments (36), the at least one fold being defined about an axis extending generally perpendicular to a longitudinal axis of the plurality of heat exchange tube segments (36); and
optionally wherein the at least one fold includes a first fold and a second fold such that the body of the heat exchanger (30) is generally U-shaped.

6. The heat exchanger (30) of any preceding claim, wherein the heat exchanger (30) is configured to operate as a condenser (26) in a container refrigeration unit.

7. A refrigeration system comprising:
a support surface (60);
a heat exchanger (30) according to claim 1 mounted to the support surface (60); and
a drain system associated with the support surface (60), wherein a portion of the drain system extends through an opening of the at least one opening (52) of the heat exchanger (30).

8. The refrigeration system of claim 7, wherein the drain system includes a conduit (62) extendable through the opening (52) of the heat exchanger (30).

9. The refrigeration system of claim 7 or 8, wherein the heat exchanger (30) is a microchannel heat exchanger.

10. The refrigeration system of any of claims 7 to 9, wherein the opening (52) is arranged at a central portion of the body of the heat exchanger (30) or wherein the opening (52) is arranged at an edge of the body of the heat exchanger (30).

11. The refrigeration system of any of claims 7 to 10, wherein the refrigeration system is a container refrigeration unit.

## Patentansprüche

1. Wärmetauscher (30), umfassend:
einen ersten Verteiler (32);
einen zweiten Verteiler (34);
einen Körper, der eine Vielzahl von Wärmetauscherrohrsegmenten (36) beinhaltet, die parallel zueinander beabstandet angeordnet sind und den ersten Verteiler (32) und den zweiten Verteiler (34) fluidkoppeln;
eine Vielzahl von Rippen (50), die zwischen benachbarten Wärmeaustauschrohrsegmenten (36) der Vielzahl von Wärmeaustauschrohrsegmenten (36) angeordnet sind; und
mindestens eine im Körper ausgebildete Öffnung (52), wobei sich die mindestens eine Öffnung (52) durch den Körper erstreckt;
wobei ein gebogener Teilabschnitt (54) von mindestens einem der Vielzahl von Wärmetauscherrohrsegmenten (36) aus einer Ebene des mindestens einen der Vielzahl von Wärmetauscherrohrsegmenten (36) heraus gebogen ist, wobei die mindestens eine Öffnung (52) durch den gebogenen Teilabschnitt (54) des mindestens einen der Vielzahl von Wärmetauscherrohrsegmenten (36) ausgebildet ist; und
der Wärmetauscher **dadurch gekennzeichnet ist, dass** er ferner eine Rippe (50) umfasst, die nicht mit dem mindestens einen der Vielzahl von Wärmetauscherrohrsegmenten (36) am gebogenen Teilabschnitt (54) verbunden ist.

2. Wärmetauscher (30) nach Anspruch 1, wobei die mindestens eine Öffnung (52) an einem mittleren Abschnitt des Körpers angeordnet ist oder die mindestens eine Öffnung (52) an einem Rand des Körpers angeordnet ist.

3. Wärmetauscher (30) nach einem der vorhergehenden Ansprüche, wobei die Vielzahl von Wärmetauscherrohrsegmenten (36) ein erstes Wärmetauscherrohrsegment (36a), das einen ersten gebogenen Teilabschnitt (54a) aufweist, und ein zweites Wärmetauscherrohrsegment (36b), das einen zweiten gebogenen Teilabschnitt (54b) aufweist, beinhaltet, wobei die mindestens eine Öffnung (52) zwischen dem ersten gebogenen Teilabschnitt (54a) und dem zweiten gebogenen Teilabschnitt (54b) definiert ist; und
wobei optional der erste gebogene Teilabschnitt (54a) in einer ersten Richtung gebogen ist und der zweite gebogene Teilabschnitt (54b) in einer zweiten Richtung, entgegengesetzt zur ersten Richtung, gebogen ist, wobei der erste gebogene Teilabschnitt (54a) und der zweite gebogene Teilabschnitt (54b) miteinander ausgerichtet sind.

4. Wärmetauscher (30) nach einem der vorhergehenden Ansprüche, wobei jedes der Vielzahl von Wärmetauscherrohrsegmenten (36) eine Vielzahl von diskreten Strömungskanälen (48) definiert, die sich über eine Länge der Vielzahl von Wärmetauscherrohrsegmenten (36) erstrecken.

5. Wärmetauscher (30) nach einem der vorhergehenden Ansprüche, wobei mindestens eine Falte in der Vielzahl von Wärmetauscherrohrsegmenten (36) ausgebildet ist, wobei die mindestens eine Falte um eine Achse definiert ist, die sich allgemein senkrecht zu einer Längsachse der Vielzahl von Wärmetauscherrohrsegmenten (36) erstreckt; und
wobei optional die mindestens eine Falte eine erste Falte und eine zweite Falte beinhaltet, derart, dass der Körper des Wärmetauschers (30) im Allgemeinen U-förmig ist.

6. Wärmetauscher (30) nach einem der vorhergehenden Ansprüche, wobei der Wärmetauscher (30) dazu konfiguriert ist, als Verflüssiger (26) in einer Behälterkühleinheit zu arbeiten.

7. Kühlsystem, umfassend;
eine Stützfläche (60);
einen Wärmetauscher (30) nach Anspruch 1, der an der Stützfläche (60) befestigt ist; und
ein Abflusssystem, das mit der Stützfläche (60) verknüpft ist, wobei sich ein Abschnitt des Abflusssystems durch eine Öffnung der mindestens einen Öffnung (52) des Wärmetauschers (30) erstreckt.

8. Kühlsystem nach Anspruch 7, wobei das Abflusssystem eine Leitung (62) beinhaltet, die sich durch die Öffnung (52) des Wärmetauschers (30) erstreckt.

9. Kühlsystem nach Anspruch 7 oder 8, wobei der Wärmetauscher (30) ein Mikrokanalwärmetauscher ist.

10. Kühlsystem nach einem der Ansprüche 7 bis 9, wobei die Öffnung (52) an einem mittleren Abschnitt des Körpers des Wärmetauschers (30) angeordnet ist oder wobei die Öffnung (52) an einem Rand des Körpers des Wärmetauschers (30) angeordnet ist.

11. Kühlsystem nach einem der Ansprüche 7 bis 10, wobei das Kühlsystem eine Behälterkühleinheit ist.

## Revendications

1. Échangeur de chaleur (30), comprenant :
un premier collecteur (32) ;
un second collecteur (34) ;
un corps comportant une pluralité de segments de tube d'échange de chaleur (36) disposés en relation parallèle espacée et
accouplant fluidiquement le premier collecteur (32) et le second collecteur (34) ;
une pluralité d'ailettes (50) disposées entre des segments de tube d'échange de chaleur adjacents (36) de la pluralité de segments de tube d'échange de chaleur (36) ; et
au moins une ouverture (52) formée dans le corps, l'au moins une ouverture (52) s'étendant à travers le corps ;
dans lequel une section courbée (54) d'au moins l'un de la pluralité de segments de tube d'échange de chaleur (36) est courbée hors du plan de l'au moins un de la pluralité de segments de tube d'échange de chaleur (36), l'au moins une ouverture (52) étant formée par la section courbée (54) de l'au moins un de la pluralité de segments de tube d'échange de chaleur (36) ; et
l'échangeur de chaleur étant **caractérisé en ce qu'**il comprend en outre une ailette (50) qui n'est pas reliée à l'au moins un de la pluralité de segments de tube d'échange de chaleur (36) au niveau de la section courbée (54).

2. Échangeur de chaleur (30) selon la revendication 1, dans lequel l'au moins une ouverture (52) est disposée dans une partie centrale du corps ou l'au moins une ouverture (52) est disposée sur un bord du corps.

3. Échangeur de chaleur (30) selon une quelconque revendication précédente, dans lequel la pluralité de segments de tube d'échange de chaleur (36) comporte un premier segment de tube d'échange de chaleur (36a) présentant une première section courbée (54a) et un second segment de tube d'échange de chaleur (36b) présentant une seconde section courbée (54b), l'au moins une ouverture (52) étant définie entre la première section courbée (54a) et la seconde section courbée (54b) ; et éventuellement dans lequel la première section courbée (54a) est courbée dans une première direction et la seconde section courbée (54b) est courbée dans une seconde direction, opposée à la première direction, la première section courbée (54a) et la seconde section courbée (54b) étant alignées.

4. Échangeur de chaleur (30) selon une quelconque revendication précédente, dans lequel chacun de la pluralité de segments de tube d'échange de chaleur (36) définit une pluralité de canaux d'écoulement discrets (48) qui s'étendent sur une longueur de la pluralité de segments de tube d'échange de chaleur (36).

5. Échangeur de chaleur (30) selon une quelconque revendication précédente, dans lequel au moins un pli est formé dans la pluralité de segments de tube d'échange de chaleur (36), l'au moins un pli étant défini autour d'un axe s'étendant globalement perpendiculairement à un axe longitudinal de la pluralité de segments de tube d'échange de chaleur (36) ; et
éventuellement dans lequel l'au moins un pli comporte un premier pli et un second pli de sorte que le corps de l'échangeur de chaleur (30) soit globalement en forme de U.

6. Échangeur de chaleur (30) selon une quelconque revendication précédente, l'échangeur de chaleur (30) étant configuré pour fonctionner comme un condenseur (26) dans une unité de réfrigération de conteneur.

7. Système de réfrigération comprenant :
une surface de support (60) ;
un échangeur de chaleur (30) selon la revendication 1 monté sur la surface de support (60) ; et
un système d'évacuation associé à la surface de support (60), dans lequel une partie du système d'évacuation s'étend à travers une ouverture de l'au moins une ouverture (52) de l'échangeur de chaleur (30).

8. Système de réfrigération selon la revendication 7, dans lequel le système d'évacuation comporte un conduit (62) pouvant s'étendre à travers l'ouverture (52) de l'échangeur de chaleur (30).

9. Système de réfrigération selon la revendication 7 ou 8, dans lequel l'échangeur de chaleur (30) est un échangeur de chaleur à microcanaux.

10. Système de réfrigération selon l'une quelconque des revendications 7 à 9, dans lequel l'ouverture (52) est disposée dans une partie centrale du corps de l'échangeur de chaleur (30) ou dans lequel l'ouverture (52) est disposée sur un bord du corps de l'échangeur de chaleur (30).

11. Système de réfrigération selon l'une quelconque des revendications 7 à 10, dans lequel le système de réfrigération est une unité de réfrigération de conteneur.
